(19) Europäisches Patentamt
European Patent Office
Office européen des brevets

(11) EP 0 719 608 A2

(12) **EUROPEAN PATENT APPLICATION**

(43) Date of publication:
**03.07.1996 Bulletin 1996/27**

(51) Int. Cl.$^6$: **B22F 1/00**

(21) Application number: **95120448.6**

(22) Date of filing: **22.12.1995**

(84) Designated Contracting States:
**DE FR GB**

(30) Priority: **28.12.1994 JP 328058/94**

(71) Applicants:
- **TOYOTA JIDOSHA KABUSHIKI KAISHA Aichi-ken (JP)**
- **FRAUNHOFER-GESELLSCHAFT ZUR FÖRDERUNG DER ANGEWANDTEN FORSCHUNG E.V. D-80636 München (DE)**

(72) Inventors:
- **Kanazawa, Isaka, c/o Toyota Jidosha K.K. Toyota-shi, Aichi-ken (JP)**
- **Veltl, Georg W., c/o Fraunhofer-Gesellschaft zur Leonrodstrasse 54, D-80636 Munich (DE)**

(74) Representative: **KUHNEN, WACKER & PARTNER Alois-Steinecker-Strasse 22 85354 Freising (DE)**

(54) **Self-lubricating composite powder alloy**

(57) Sliding materials having both a low friction coefficient owing to self-lubricity and enough abrasion resistance to be used as sliding materials. First, milling powder in which a solid lubricant is finely dispersed in a metallic base material is produced by mechanically alloying a fine powdery metallic base material and a fine powdery solid lubricant. Second, this milling powder is mixed with metallic base powder, thereby producing a self-lubricating composite powder. Then, the self-lubricating composite powder is subjected to a solidifying treatment such as sintering and thermal spraying, thereby producing a self-lubricant composite powder alloy. Since the solid lubricant in the milling powder exhibits self-lubricity, and the metallic base powder and the metallic base material in the milling powder exhibit abrasion resistance, this self-lubricating composite powder alloy simultaneously attains a low friction coefficient and a high abrasion resistance.

EP 0 719 608 A2

## Description

### BACKGROUND OF THE INVENTION

#### Field of the Invention

The present invention relates to an abrasion-resisting alloy for the use of sliding surfaces of shafts, bearings, bushes, washers, sliding plates and so on, and more particularly to an abrasion-resisting alloy formed of self-lubricating composite powder.

#### Description of Related Art

Japanese Unexamined Patent Publication (KOKAI) No.63-4031 discloses a method of producing an abrasion-resisting alloy which comprises the steps of mechanically alloying base metal powder and hard particles into alloy powder, mixing a self-lubricant with this alloy powder, forming billets from the mixture under pressure, and hot extruding the billets. The abrasion-resisting alloy produced by this method has following disadvantages: The metal and the self-lubricant are poorly integrated so that they are easily separated from each other, and their uniform dispersion is difficult.

In the meantime, Japanese Unexamined Patent Publication (KOKAI) No. 4-41601 discloses a method of producing, by sintering, thermal spraying, or electrodepositing, composite powder which can form sliding materials having both lubricity and abrasion resistance. In this method, mixed powder of copper or a copper alloy, a solid lubricant, and ceramics are mechanically alloyed into composite powder, and then this composite powder, and copper or a copper alloy are further mechanically alloyed into copper-solid lubricant-ceramics composite powder. However, an abrasion-resisting alloy formed of this copper-solid lubricant-ceramics composite powder exhibits poor lubricity, because self-lubricant particles get so small that crystals are damaged into an amorphous state.

Therefore, the prior art disclosed in Japanese Unexamined Patent Publication (KOKAI) No. 7-90302 was developed in order to dissolve the aforementioned disadvantages and provide self-lubricating composite powder which is a superior raw material of sliding members having high lubricity. Using this prior art, self-lubricating composite powder was produced by mechanically alloying copper-based metal powder in a string or flake shape and solid lubricant powder appropriately. A friction test demonstrated that alloys formed of this powder by sintering, thermal spraying and so on exhibit superior self-lubricity and attain low friction coefficients.

The friction test, however, also revealed that these alloys have insufficient abrasion resistance and are not suitable as raw materials of sliding members which are demanded of long life.

### SUMMARY OF THE PRESENT INVENTION

Therefore, it is an object of the present invention to provide a self-lubricating composite powder alloy which simultaneously attains a low friction coefficient owing to self-lubricity and enough abrasion resistance to be used as sliding members.

Having earnestly studied to achieve this object, the present inventors have obtained self-lubricating composite powder by first mechanically alloying fine metallic powder and solid lubricant powder into milling powder in which the solid lubricant is finely dispersed in a metallic base material, and second mixing metallic base powder with this milling powder. Then, the present inventors have found that a self-lubricating composite powder alloy produced by applying a solidifying treatment such as sintering, thermal spraying, and so on to this self-lubricating composite powder simultaneously satisfies a low friction coefficient and a high abrasion resistance, and thereby have completed the present invention.

The self-lubricating composite powder alloy of the present invention characteristically comprises milling powder in which a fine powdery solid lubricant is finely dispersed in a metallic base material, and metallic base powder which fills in space between particles of the milling powder and is integral with the milling powder.

The content of the milling powder in the whole self-lubricating composite powder alloy is 10 to 50 % by volume. Further, the content of the solid lubricant in the milling powder is in the range from 10 to 50 % by volume. When the content of the solid lubricant in the milling powder is less than 10 % by volume, lubricity is insufficient and problems are caused. On the other hand, when the content of the solid lubricant in the milling powder is more than 50 % by volume, abrasion resistance and other mechanical properties are degraded when used as materials for sliding members. These phenomena are also true of the content of the milling powder in the self-lubricating composite powder alloy.

Suitable metallic base materials which constitute milling powder are copper (Cu), aluminum (Al), iron (Fe), titanium (Ti), copper-based alloys, aluminum-based alloys, iron-based alloys, and titanium-based alloys. Further, suitable metallic base powders which fill in the space between particles of the milling powder are powders of copper (Cu), aluminum (Al), iron (Fe), titanium (Ti), copper-based alloys, aluminum-based alloys, iron-based alloys, and titanium-based alloys. Suitable solid lubricants are dichalcogenite ($WS_2$, $MoS_2$, $NbS_2$), graphite, PTFE, and hexagonal crystal BN.

The milling powder is approximately the same as 'self-lubricating composite powder' described in the cited Japanese Unexamined Patent Publication (KOKAI) No.5-170390. The milling powder comprises a metallic structure in which metal elements composed of a metallic base material in a string or flake shape of 20 $um^2$ in cross sectional area are laminated, and a solid lubricant structure which fills in the space between the metal elements of the metallic structure and which is mechanically integrated with the surface of each of the metal elements.

To be specific, the milling powder is produced by mechanically alloying raw material powder comprising a metallic base material and a solid lubricant. As a result of mechanical compression, the metallic base material powder particles are rolled out in an elongated shape and folded into multi-layered string- or flake-shaped metal elements. On the other hand, as a result of mechanical compression, the solid lubricant powder particles are pressed against the surface of the metallic base material and integrated as coating layers with the surfaces of the string- or flake-shaped metal elements, and at the same time, exist in the space between the laminated metal elements. When the amount of solid lubricant powder is relatively large, the solid lubricant powder particles in a string- or flake-shape are laminated on themselves.

In summary, the milling powder comprises the string- or flake-shaped metal elements which are laminated in multiple layers as mentioned in the above, and the string- or flake-shaped solid lubricant powder particles which are laminated in the same way as the metal elements. In other words, the milling powder has a multilayered structure in which the metal elements composed of a metallic base material and the solid lubricant get tangled.

The average cross sectional area of many string- or flake-shaped metal elements constituting one particle of milling powder is desirably less than 20 $um^2$. When the average sectional area is more than 20 $um^2$, the metallic base material and the solid lubricant cannot be uniformly mixed with each other. On the contrary, there is no lower limit to the average cross sectional area, but as the average cross sectional area of the metal elements gets smaller, the crystals of the solid lubricant are more easily damaged. Therefore, it is more preferable that the average cross sectional area of the string- or flake-shaped metal elements is approximately in the range from 1 to 20 $um^2$.

On the other hand, the cross sectional area of the solid lubricant powder particles which are laminated in the shape of a string or a flake is not particularly limited, but the solid lubricant powder particles must maintain a crystal structure in order not to damage self-lubricity. Therefore, it is preferable that solid lubricant powder particles of less than 10 um in diameter in a crystal structure are contained in one particle of milling powder by more than 90 % by volume, and that solid lubricant powder particles of less than 1.0 um in diameter in a crystal structure are contained in one particle of milling powder by less than 50 % by volume. When the solid lubricant powder particles of more than 10 um in diameter exceed 10 % by volume, the metallic base material and the solid lubricant are not uniformly mixed with each other. On the other hand, when solid lubricant powder particles of less than 1 um in diameter exceed 50 % by volume, the solid lubricant cannot sufficiently maintain a crystal structure, and the lubricating function deteriorates.

By the way, production of the self-lubricating composite powder alloy of the present invention employs a mechanical alloying treatment, and a solidifying treatment such as sintering, thermal spraying, and so on.

Suitable apparatus for mechanical alloying are a ball mill, an Attoritor, a planetary ball mill and so on. The mechanical alloying is preferably conducted under an atmosphere of inert gas or under reduced pressure (almost in vacuum) in order to prevent reaction with atmospheric gas. Further, the milling powder containing the solid lubricant, which is produced by mechanical alloying, has such a high activity as to have a danger of firing upon contact with the air. For avoiding this unexpected event, it is preferable to add relatively inactive substance such as paraffin by several percentages before milling. Paraffin is liquefied during milling to cover the surfaces of the milling powder particles and prevent reaction with active gas even after milling. It should be noted that this relatively inactive substance such as paraffin must be removable by evaporation when heated, for example, sintered.

Ordinary sintering methods can be employed in producing a self-lubricating composite powder alloy of the present invention. A typical sintering method comprises the steps of die-molding the aforementioned self-lubricating composite powder into a green compact, and sintering the green compact into a sintered body. In sintering, it is preferable to employ heating in vacuum or in a protecting atmosphere, or hot pressing in which sintering is conducted under applied pressure. Besides, it is possible to employ most methods of solidifying powder into an alloy such as hot isostatic pressing (HIP), a method of pressing powder into billets and hot extruding the billets.

Further, in the case of some kinds of sliding members, sliding members having the self-lubricating composite powder alloy of the present invention on the sliding surfaces can be produced by coating and fixing the aforementioned self-lubricating composite powder on component part surfaces by thermal spraying or the like.

The self-lubricating composite powder alloy of the present invention has the following advantages.

Since the self-lubricating composite powder alloy comprises milling powder in which a solid lubricant is finely dispersed in a metallic base material, and metallic base powder having high hardness, the solid lubricant in the milling powder exhibits self-lubricity, and at the same time, the metallic base powder and the metallic base material in the milling powder exhibit high abrasion resistance.

Therefore, the present invention can provide abrasion-resisting sliding materials which satisfy both a low friction coefficient owing to its self-lubricity and enough abrasion resistance to be used as sliding materials.

## BRIEF DESCRIPTION OF THE DRAWINGS

A more complete appreciation of the present invention and many of its advantages will be readily obtained as the same becomes better understood by reference to the following detailed description when considered in connection with the accompanying drawing and detailed specification, all of which forms a part of the disclosure:

Figure 1 is an optical microphotograph (magnification: 1000 x) of milling powder which is fixed in a resin for taking the photograph and which is to be used in producing a copper-zinc-alloy-graphite self-lubricating composite powder alloy of preferred embodiments of the present invention;
Figure 2 is an optical microphotograph (magnification: 1000 x) showing the metallic structure of a copper-zinc-alloy-graphite self-lubricating composite powder alloy of a preferred embodiment of the present invention in which a copper-zinc alloy is mixed to milling powder by 67 % by volume;
Figure 3 is an optical microphotograph (magnification: 1000 x) showing the metallic structure of a copper-zinc-alloy-graphite self-lubricating composite powder alloy of a preferred embodiment of the present invention in which a copper-zinc alloy is mixed to milling powder by 34 % by volume;
Figure 4 is a schematic diagram of a block-on-a-ring type apparatus for a friction test;
Figure 5 is a graph showing friction coefficients of test specimens of preferred embodiments of the present invention and a comparative specimen; and
Figure 6 is a graph showing abrasion depth of the test specimens of the preferred embodiments of the present invention and the comparative specimen.

## DETAILED DESCRIPTION OF THE PREFERRED EMBODIMENTS

Self-lubricating composite powder alloys were produced as preferred embodiments of the present invention in which graphite was used as a solid lubricant and a copper-zinc alloy (i.e., brass) was used as a metallic base material and metallic base powder.

First, copper-zinc alloy powder comprising copper and 40 % by weight of zinc was mixed with 20 % by volume of graphite powder, and the mixture was subjected to mechanical alloying, whereby milling powder was produced. The copper-zinc alloy powder had an average particle diameter of 40 um, a maximum particle diameter of 60 um, and a minimum particle diameter of 6 um. On the other hand, the graphite powder had an average particle diameter of 10 um. It must be noted that before mechanical alloying, 5g of paraffin was added to 100g in total of the aforementioned copper-zinc alloy powder and the graphite powder.

The mechanical alloying treatment was applied by using the following planetary ball mill in an argon atmosphere for 25 hours. The weight ratio of balls to powder was 8.

⟨Planetary Ball Mill⟩

| | |
|---|---|
| balls: | made of bearing steel (100Cr6), 11 mm in diameter |
| vessel: | made of stainless steel 500 ml in capacity |
| revolutionary speed: | 270 rpm |
| rotary speed: | 810 rpm |

The milling powder thus obtained was buried and fixed in a resin, and the cross section was observed by an optical microscope. Figure 1 shows a microphotograph of a part of the cross section (magnification: 1000 x). In this figure, the black background is a fixing resin for taking the photograph, and a plurality of islands are milling powder. The white part of the milling powder designate a metallic base material which is a copper-zinc alloy, and the black spots in the white part are the solid lubricant which is graphite powder finely dispersed in the metallic base material. It was confirmed that fine powdery solid lubricant was finely dispersed and fixed in the metallic base material.

The average particle diameter of the milling powder was about 5 um, and the dispersion parameter D of the string-shaped or flake-shaped metallic base material contained in the milling powder was about 1. This dispersion parameter D is defined as

$$D = (S \times V) / N$$

where S is cross sectional area of powder, V is volume ratio of metal elements (0.8 in this preferred embodiment), and N is the number of metallic elements in one particle of milling powder.

Next, powder of about 10 to 60 um in particle diameter of the same copper-zinc alloy as the aforementioned metallic base material was added as metallic base powder to the aforementioned milling powder by 67 % by volume, and mixed by a powder mixing apparatus for 30 minutes, thereby preparing mixed powder A. In a similar way, the same copper-zinc alloy powder was added to the milling powder by 34 % by volume and mixed, thereby preparing mixed powder B.

These two kinds of mixed powder were respectively hot pressed in an argon atmosphere at a high temperature of 500°C under a pressure of 40 $kN/cm^2$ for fifteen minutes, thereby obtaining sintered bodies A and B. For the purpose of reference, a cross-sectional microscopic photograph (magnification: 1000 x) of the sintered body A is shown in Figure 2, and that (magnification: 1000 x) of the sintered body B is shown in Figure 3. In these figures, the white parts are metallic base powder composed of a copper-zinc alloy, and the black parts are milling powder. Figures 2 and 3 show that the metallic base powder particles fill in the space between the milling powder particles and are integrated with the milling powder particles.

Further, each of the obtained sintered bodies A and B was machined into a block of 10 mm x 4 mm x 20 mm in size, thereby preparing specimens A and B. These specimens were subjected to a block-on-a-ring type friction test according to French Standard 'NF T 51107'. Figure 4 shows an apparatus for examining friction. A ring to slide against each of the test specimens was 40 mm in diameter, made of bearing steel (SUJ2 according to the Japanese Industrial Standards) and had a surface finishing of Ra = 0.03, a sliding speed of 1 m/s, a load of 10 N, and a sliding distance of 1 km. The sliding condition was dry, that is, no oil or the like was used.

As a result, the friction coefficients of the specimens A and B were a little more than 0.7, and about 0.4, respectively, as shown in Figure 5. The abrasion depth of the specimens A and B was about 13 um and about 20 um, respectively, as shown in Figure 6.

In Figures 5 and 6, 100 vol % indicates a comparative example based on the prior art disclosed in the aforementioned Japanese Unexamined Patent Publication (KOKAI) No.5-170390. To be specific, 100 % of the milling powder to which no metallic base powder was added was sintered and machined in the same way as the preferred embodiments, thereby preparing a comparative specimen, and its friction test results are shown as 100 vol % in these figures.

It is apparent from Figures 5 and 6 that as the ratio of the milling powder to be mixed with the metallic base powder increased, the abrasion depth was decreased drastically and accordingly the durability as sliding materials was increased, although the friction coefficient was increased slightly.

Thus, it was demonstrated that the self-lubricating composite powder alloy of the preferred embodiments of the present invention attained both a low friction coefficient and a superior friction resistance simultaneously, and had superior characteristics as self-lubricating sliding materials.

Having now fully described the present invention, it will be apparent to one of ordinary skill in the art that many changes and modifications can be made thereto without departing from the spirit or scope of the present invention as set forth herein including the appended claims.

## Claims

1. A self-lubricating composite powder alloy comprising:

   milling powder in which a fine powdery solid lubricant is finely dispersed and fixed in a metallic base material; and

   metallic base powder which fills in space between particles of said milling powder and is integral with said milling powder.

2. A self-lubricating composite powder alloy according to claim 1, wherein the content of said milling powder in the self-lubricating composite powder alloy is in the range from 10 to 50 % by volume.

3. A self-lubricating composite powder alloy according to claim 1, wherein the content of said solid lubricant in said milling powder is in the range from 10 to 50 % by volume.

FIG. 1

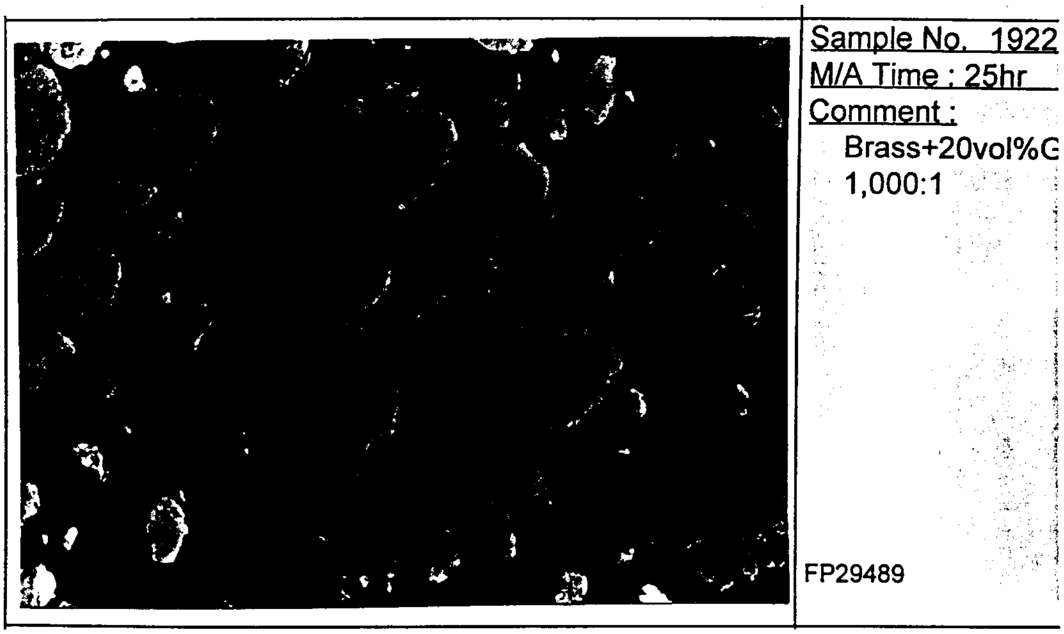
Sample No. 1922
M/A Time : 25hr
Comment :
Brass+20vol%G
1,000:1
FP29489

FIG. 2

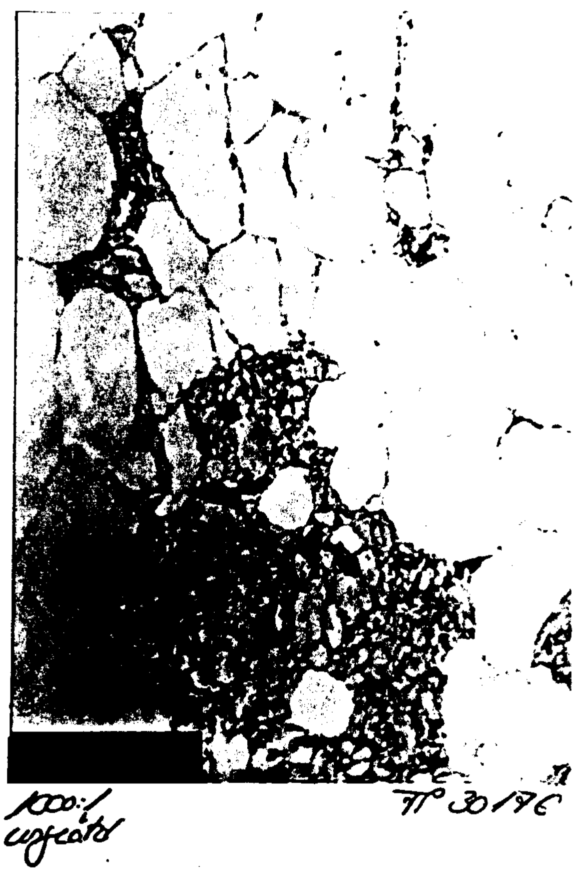

FIG. 3

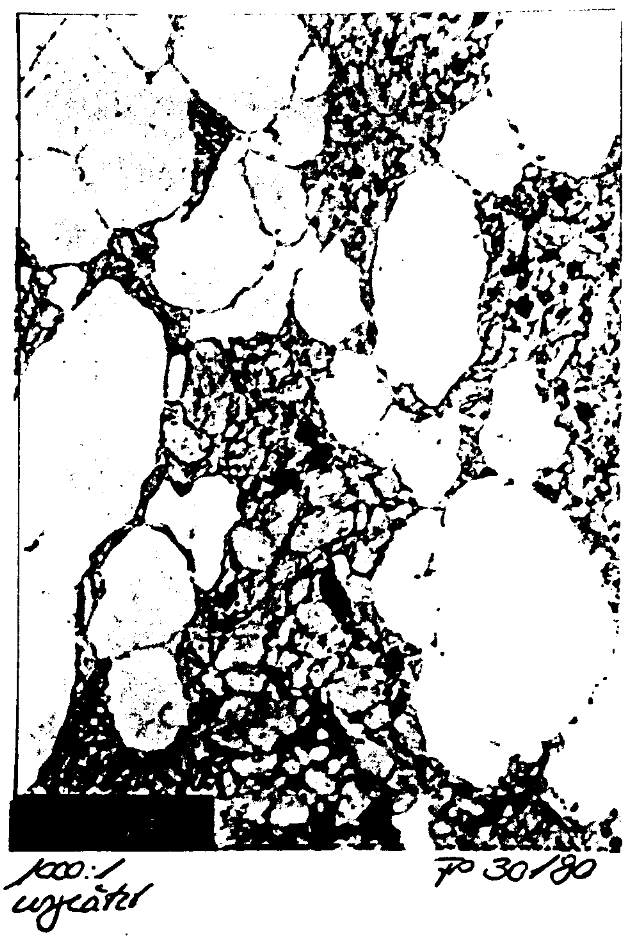

FIG. 4

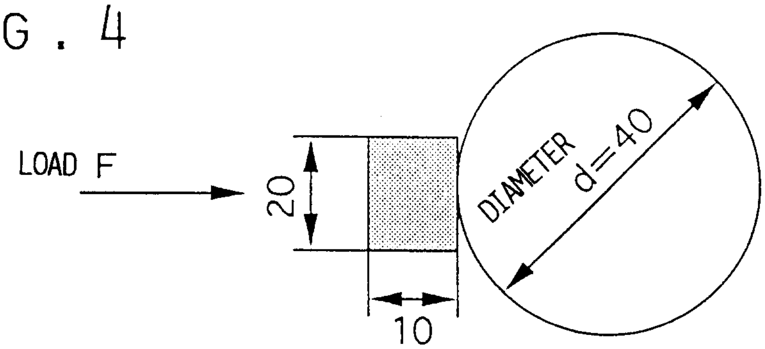
LOAD F
20
10
DIAMETER d=40

FIG. 5

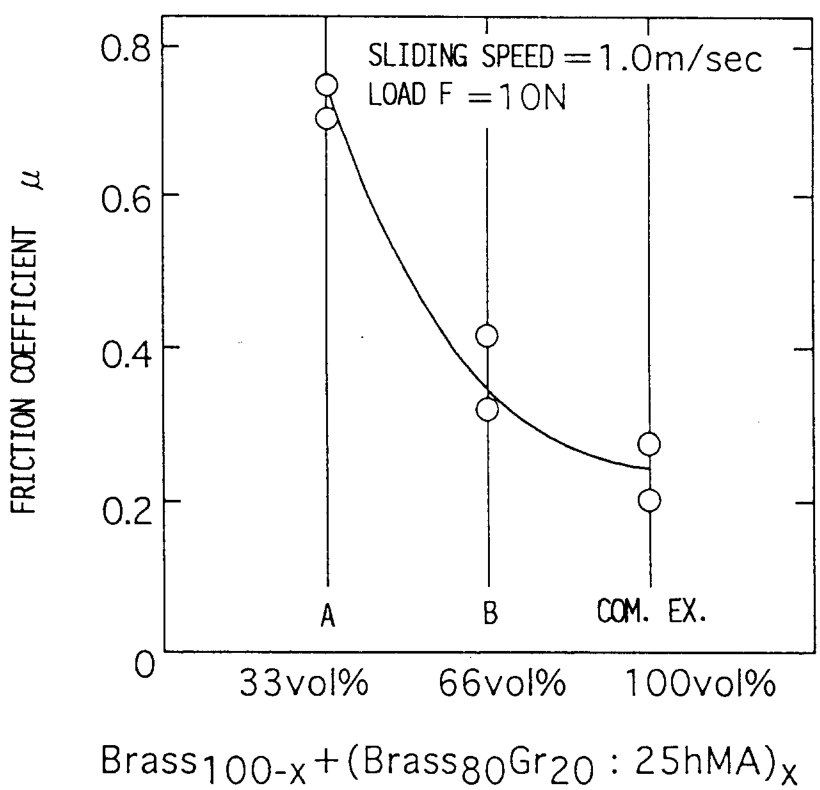
FRICTION COEFFICIENT μ
0.8
0.6
0.4
0.2
0
SLIDING SPEED = 1.0m/sec
LOAD F = 10N
A
B
COM. EX.
33vol%
66vol%
100vol%
Brass100-x+(Brass80Gr20 : 25hMA)x

FIG. 6

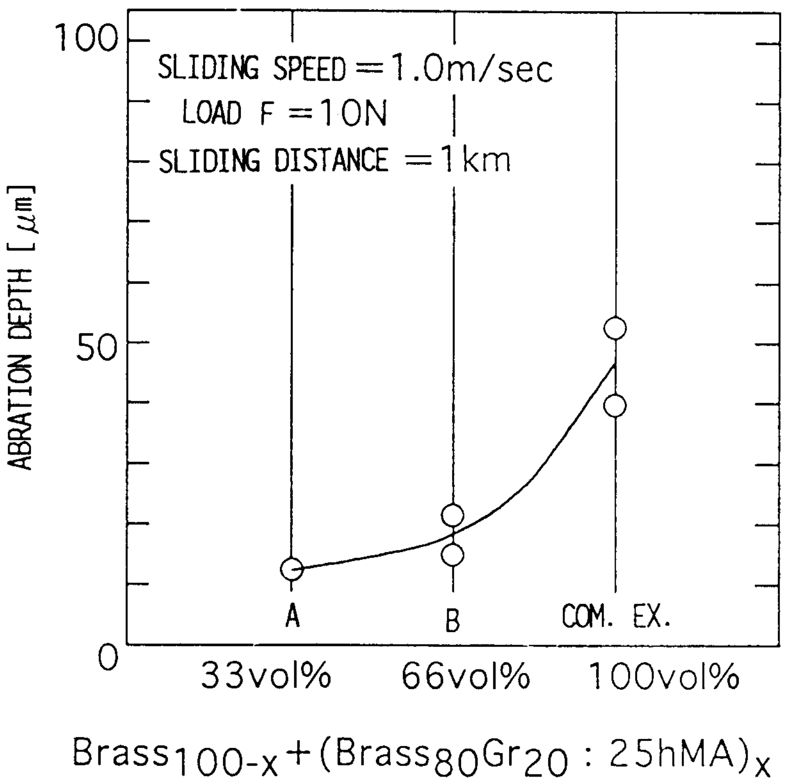
100
50
0
ABRATION DEPTH [μm]
SLIDING SPEED = 1.0m/sec
LOAD F = 10N
SLIDING DISTANCE = 1km
A
B
COM. EX.
33vol%
66vol%
100vol%
Brass100-x + (Brass80Gr20 : 25hMA)x